# DEMANDE DE BREVET EUROPEEN

(11) **EP 4 796 305 A1**
(43) Date de publication de la demande: **26.08.2026**
(21) Numéro de dépôt: 26156661.6
(22) Date de dépôt: 05.02.2026
(51) Int. Cl.: B29C 70/54, B29C 70/88, B29D 99/00, B32B 3/12, F02C 7/24, G10K 11/168, B29C 33/00, B29C 65/02, B29C 65/00, B29D 24/00, B29K 101/12

(54) **PROCÉDÉ DE FABRICATION D'UNE STRUCTURE ALVÉOLAIRE COURBE À PARTIR DE TUBES RIGIDES, STRUCTURE ALVÉOLAIRE AINSI OBTENUE**

(30) Priorité: 24.02.2025 FR 2501897
(71) Demandeur: Airbus Operations S.A.S., 31060 Toulouse (FR)
(72) Inventeur: PERRIER, Christophe, 31060 TOULOUSE Cedex 9 (FR)
(74) Mandataire: Airbus-OPS SAS

(57) **Abrégé**

L'invention a pour objet un procédé de fabrication d'une structure alvéolaire d'un panneau d'atténuation acoustique, ledit procédé de fabrication comprenant :
- une étape de fabrication de conduits (46) en matériau rigide thermoplastique,
- une étape de mise en place des conduits (46) sur un outillage (48) qui comporte, pour chaque conduit (46), un noyau relié à une base (50) ; chaque conduit (46) étant emmanché sur un noyau, sa première extrémité (46.1) étant en contact avec la base (50),
- une étape de mise en place d'une couche flexible (56) en matériau thermoplastique contre les deuxièmes extrémités) des conduits (46),
- une étape de chauffage et de pression à plat pour fusionner la couche flexible (56) et les deuxièmes extrémités des conduits (46) de manière à former la structure alvéolaire,
- une étape de démoulage de la structure alvéolaire.

## Description

La présente demande se rapporte à un procédé de fabrication d'une structure alvéolaire courbe à partir de tubes rigides, à une structure alvéolaire ainsi obtenue ainsi qu'à un panneau d'atténuation acoustique comprenant au moins une telle structure alvéolaire.

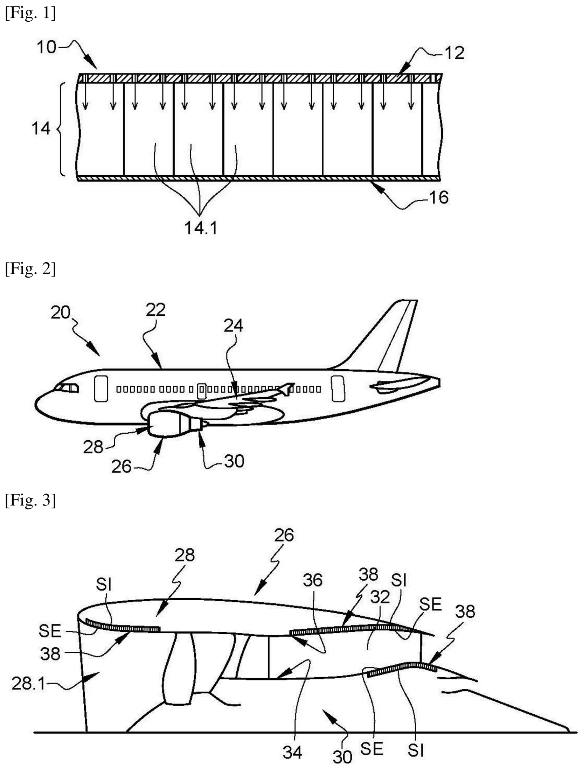

Selon un mode de réalisation de l'art antérieur, un ensemble de propulsion comprend une nacelle ainsi qu'une turbomachine double flux positionnée à l'intérieur de la nacelle. Certaines surfaces de la nacelle et de la turbomachine comprennent des panneaux d'atténuation acoustique pour atténuer les nuisances sonores. Selon un mode de réalisation visible sur la figure 1, un panneau d'atténuation acoustique 10 comprend au moins une couche perméable 12, au moins une structure alvéolaire 14 et une couche pleine 16. Pour la suite de la description, une couche est dite perméable si elle est poreuse ou comprend des ouvertures ou des trous la traversant.

Un tel panneau d'atténuation acoustique 10 utilise le principe d'un résonateur quart d'onde. Ainsi, la structure alvéolaire 14 présente des cellules 14.1 dont le volume est ajusté en fonction de la plage de fréquences des ondes sonores à atténuer.

Selon une configuration, le panneau d'atténuation acoustique 10 peut comprendre deux structures alvéolaires superposées, séparées par une couche perméable.

Le panneau d'atténuation acoustique 10 comprend une surface aérodynamique qui présente généralement une forme complexe.

Selon un mode de réalisation de l'art antérieur, la couche perméable 12, la couche pleine 16 et la (ou les) structure(s) alvéolaire(s) 14 sont réalisées en matériau composite thermodurcissable.

Les panneaux d'atténuation acoustique en matériau composite thermodurcissable sont difficilement recyclables.

Pour faciliter le recyclage des panneaux d'atténuation acoustique, la couche perméable 12, la couche pleine 16 et la (ou les) structure(s) alvéolaire(s) 14 peuvent être réalisées en un même matériau, notamment en matériau thermoplastique.

Toutefois, les structures alvéolaires 14 en matériau thermoplastique sont rigides et peuvent difficilement être mises en forme selon une forme complexe.

La présente invention vise à remédier à tout ou partie des inconvénients de l'art antérieur. A cet effet, l'invention a pour objet un procédé de fabrication d'une structure alvéolaire d'un panneau d'atténuation acoustique, ladite structure alvéolaire comportant des conduits qui délimitent des alvéoles, chaque conduit s'étendant entre des première et deuxième extrémités, ledit procédé de fabrication comprenant une étape de fabrication des conduits en matériau rigide thermoplastique.

Selon l'invention, le procédé de fabrication comprend :
- une étape de mise en place des conduits sur un outillage qui comporte au moins une base ainsi que, pour chaque conduit, un noyau relié à la base, chaque conduit étant emmanché sur un des noyaux et sa première extrémité étant en contact avec la base,
- une étape de mise en place d'une couche flexible en matériau thermoplastique contre les deuxièmes extrémités des conduits,
- une étape de chauffage et de pression à plat pour fusionner la couche flexible et les deuxièmes extrémités des conduits de manière à former la structure alvéolaire,
- une étape de démoulage de la structure alvéolaire.

Ce procédé permet d'obtenir une structure alvéolaire en matériau thermoplastique recyclable qui peut aisément être mise en forme selon une géométrie complexe.

Selon une autre caractéristique, chaque noyau présente une section transversale identique à la section transversale intérieure du conduit qu'il supporte et/ou une longueur sensiblement identique ou légèrement inférieure à celle du conduit qu'il supporte.

Selon une autre caractéristique, lors de l'étape de chauffage et de pression à plat, une élévation de température supérieure ou égale à la température de fusion du matériau thermoplastique des conduits et de la couche flexible est produite au niveau d'une l'interface entre la couche flexible et les deuxièmes extrémités des conduits, une pression suffisante étant exercée pour fusionner l'interface.

L'invention a également pour objet un outillage pour la mise en œuvre d'un procédé de fabrication d'une structure alvéolaire d'un panneau d'atténuation acoustique selon l'une des caractéristiques précédentes, caractérisé en ce que l'outillage comprend :
- au moins une base présentant une surface supérieure sensiblement plane,
- pour chaque conduit de la structure alvéolaire, un noyau relié à la base,
- au moins un système de chauffage et de pression configuré pour chauffer une couche flexible et au moins l'une des extrémités des conduits de la structure alvéolaire ainsi que pour plaquer la couche flexible contre les extrémités des conduits.

Selon une autre caractéristique, le système de chauffage et de pression comprend au moins une plaque chauffante qui présente une surface inférieure sensiblement parallèle à la surface supérieure de la base ainsi qu'au moins un actionneur configuré pour presser la surface inférieure de la plaque chauffante contre la couche flexible.

L'invention a également pour objet une structure alvéolaire d'un panneau d'atténuation acoustique obtenue à partir d'un procédé de fabrication selon l'une des caractéristiques précédentes ainsi qu'un panneau d'atténuation acoustique comprenant au moins une telle structure alvéolaire.

Enfin, l'invention a pour objet un procédé de fabrication d'un panneau d'atténuation acoustique comprenant :
- une étape de mise en place d'une structure alvéolaire obtenue à partir d'un procédé de fabrication selon l'une des caractéristiques précédentes, contre une première structure parmi une structure perméable à au moins une onde sonore et une couche pleine imperméable aux ondes sonores,
- une étape de mise en place d'une deuxième structure, différente de la première structure parmi la structure perméable et la couche pleine, contre les premières extrémités des conduits de la structure alvéolaire,
- une étape d'assemblage de la structure perméable, de la structure alvéolaire et de la couche pleine pour obtenir une fusion de la première structure avec la couche flexible de la structure alvéolaire et de la deuxième structure avec les premières extrémités des conduits de la structure alvéolaire.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'une partie d'un panneau d'atténuation acoustique illustrant un mode de réalisation de l'art antérieur,
- La figure 2 est une vue latérale d'un aéronef,
- La figure 3 est une demi-coupe longitudinale d'un ensemble de propulsion d'un aéronef,
- La figure 4 est une coupe longitudinale d'une partie d'un panneau d'atténuation acoustique comprenant une structure alvéolaire en matériau thermoplastique illustrant un mode de réalisation de l'invention,
- La figure 5 est une vue en perspective d'un outillage de fabrication d'une structure alvéolaire illustrant un mode de réalisation de l'invention,
- La figure 6 est une vue en perspective de l'outillage visible sur la figure 5 après une étape de mise en place de conduits qui délimitent les alvéoles d'une structure alvéolaire illustrant un mode de réalisation de l'invention,
- La figure 7 est une vue en perspective de l'outillage visible sur la figure 5 après une étape de mise en place d'une couche flexible illustrant un mode de réalisation de l'invention,
- La figure 8 est une vue en perspective de l'outillage visible sur la figure 5 après une étape de chauffage pour relier les conduits et la couche flexible illustrant un mode de réalisation de l'invention,
- La figure 9 est une vue en perspective de la structure alvéolaire obtenue grâce à l'outillage visible sur la figure 5 après une étape de démoulage illustrant un mode de réalisation de l'invention,
- la figure 10 est une vue en perspective de la structure alvéolaire visible sur la figure 9 après une étape de mise en forme illustrant un mode de réalisation de l'invention,
- la figure 11 est une coupe transversale d'une structure alvéolaire illustrant un premier mode de réalisation de l'invention,
- la figure 12 est une coupe transversale d'une structure alvéolaire illustrant un deuxième mode de réalisation de l'invention.

Selon un mode de réalisation visible sur la figure 2, un aéronef 20 comprend un fuselage 22, deux ailes 24 disposées de part et d'autre du fuselage 22 ainsi que des ensembles de propulsion 26 fixés sous les ailes 24. Chaque ensemble de propulsion 26 comprend une nacelle 28 et une turbomachine 30 positionnée à l'intérieur de la nacelle 28.

Selon un mode de réalisation visible sur la figure 3, l'ensemble de propulsion 26 comprend une entrée d'air 28.1, un conduit d'éjection secondaire 32, canalisant un flux d'air secondaire, qui est délimité par une paroi intérieure 34 (également appelée IFS pour inner fixed structure en anglais) et par une paroi extérieure 36 (également appelée OFS pour outer fixed structure en anglais).

Selon une configuration, l'entrée d'air 28.1, la paroi intérieure 34 ou la paroi extérieure 36 comprend au moins un panneau d'atténuation acoustique 38 qui présente une surface extérieure SE en contact avec le flux d'air secondaire et une surface intérieure SI opposée à la surface extérieure SE.

Bien que décrite appliquée à un conduit d'éjection secondaire 32, l'invention n'est pas limitée à cette application. Ainsi, le panneau d'atténuation acoustique 38 peut être positionné au niveau de toute peau qui présente une surface extérieure SE en contact avec un milieu extérieur Ext dans lequel se propagent en fonctionnement des ondes sonores, comme une lèvre et un conduit d'une entrée d'air d'une nacelle d'aéronef, un carter de soufflante d'une nacelle d'aéronef ou toute autre surface de l'ensemble de propulsion 26 ou de l'aéronef 20. Quelle que soit la configuration, l'aéronef 20 comprend au moins un panneau d'atténuation acoustique 38.

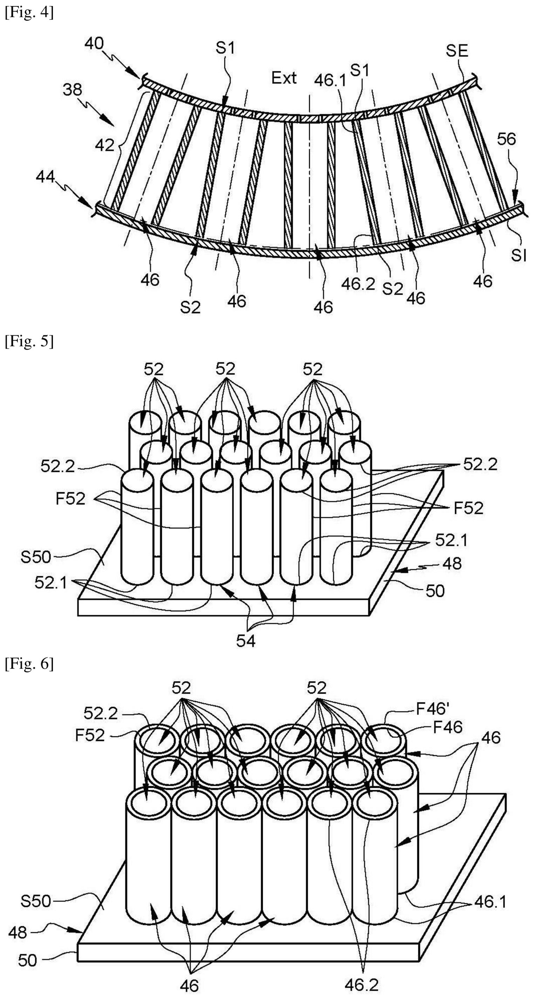

Selon un mode de réalisation visible sur la figure 4, un panneau d'atténuation acoustique 38 comprend, de la surface extérieure SE vers la surface intérieure SI, une structure perméable 40 dont une face forme la surface extérieure SE, au moins une structure alvéolaire 42 ainsi qu'une couche pleine 44 dont une face forme la surface intérieure SI.

La couche pleine 44 comprend au moins une plaque fine, métallique ou en matériau composite, imperméable aux ondes sonores.

La structure perméable 40, également appelée couche acoustiquement résistive, peut être métallique ou en matériau composite et comprendre une ou plusieurs couche(s). La structure perméable 40 est perméable à au moins une onde sonore se propageant dans le milieu extérieur Ext.

La structure perméable 40 et la couche pleine 44 ne sont pas plus décrites car elles peuvent être identiques à celles de l'art antérieur.

Selon une configuration visible sur la figure 4, le panneau d'atténuation acoustique 38 comprend une unique structure alvéolaire 42 entre la structure perméable 40 et la couche pleine 44. Selon une autre configuration, le panneau d'atténuation acoustique 38 comprend, entre la structure perméable 40 et la couche pleine 44, plusieurs structures alvéolaires 42 superposées les unes sur les autres et séparées entre elles par une structure perméable, également appelée septum, ou plusieurs structures alvéolaires 42 juxtaposées.

Quel que soit le mode de réalisation, le panneau d'atténuation acoustique 38 comprend au moins une structure alvéolaire 42 intercalée entre une structure perméable 40 à au moins une onde sonore et une couche pleine 44 imperméable aux ondes sonores.

La structure alvéolaire 42 s'étend entre une première surface S1 en contact avec ou orientée vers la structure perméable 40 ainsi qu'une deuxième surface S2 en contact avec ou orientée vers la couche pleine 44. Les première et deuxième surfaces S1, S2 sont sensiblement parallèles entre elles. Pour la suite de la description, une direction longitudinale est une direction perpendiculaire à au moins une des première et deuxième surfaces S1, S2. Un plan transversal est un plan perpendiculaire à la direction longitudinale.

La structure alvéolaire 42 comprend une pluralité de conduits 46 qui s'étendent chacun entre des première et deuxième extrémités 46.1, 46.2 situées respectivement au niveau des première et deuxième surfaces S1, S2.

Ces conduits 46 sont réalisés en matériau composite thermoplastique.

Selon les modes de réalisation visibles sur les figures 4 à 11, les conduits 46 présentent des sections transversales circulaires.

Bien entendu, l'invention n'est pas limitée à ces sections transversales. Ainsi, les conduits pourraient avoir des sections transversales oblongues, triangulaires, en forme de losange ou toute autre forme.

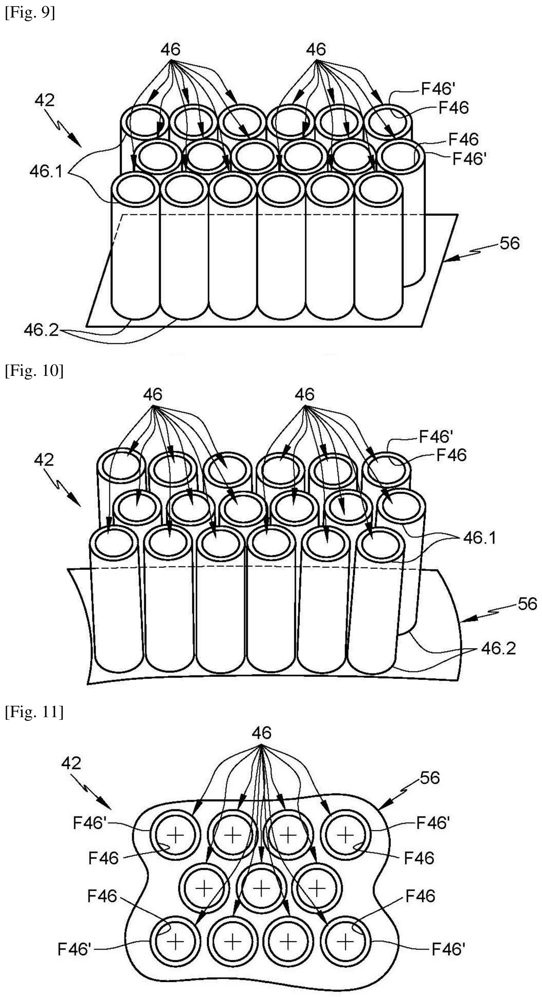

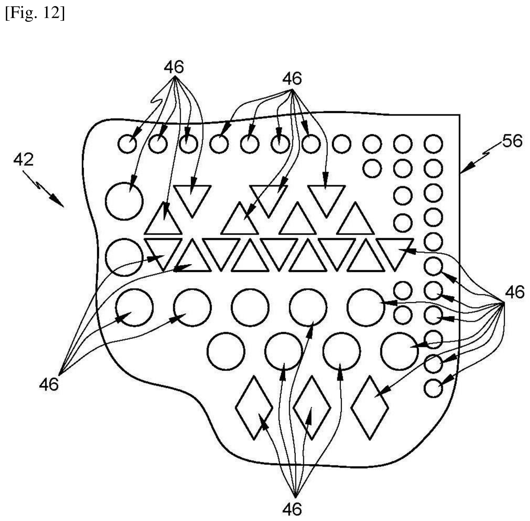

Selon une configuration visible sur la figure 11, les conduits 46 d'une même structure alvéolaire 42 ont des sections toutes identiques. Selon une autre configuration visible sur la figure 12, les conduits 46 d'une même structure alvéolaire 42 ont des sections différentes. Selon un mode de réalisation visible sur la figure 11, les conduits 46 d'une même structure alvéolaire 42 sont répartis de manière régulière sur toute la surface de la structure alvéolaire 42. Selon un autre mode de réalisation visible sur la figure 12, les conduits 46 d'une même structure alvéolaire 42 sont répartis de manière irrégulière. Ainsi, la structure alvéolaire 42 comprend au moins une première zone qui présente une première densité faible de conduits 46 et au moins une deuxième zone qui présente une deuxième densité de conduits 46 plus importante que la première densité.

Chaque conduit 46 comprend une face intérieure F46 et une face extérieure F46'. Chaque conduit 46 présente une section transversale intérieure correspondant à la section transversale de la face intérieure F46.

Selon un mode de réalisation, chaque conduit 46 comprend une matrice en résine thermoplastique ainsi que des fibres de renforts noyées dans la matrice.

La (ou les) densité(s) de conduits 46, la (ou les) forme(s) de la section transversale des conduits 46, les dimensions (longueurs et sections transversales intérieures) des conduits 46 sont déterminées en fonction des caractéristiques recherchées pour le panneau d'atténuation acoustique 38.

Un procédé de fabrication de la structure alvéolaire 42 utilise un outillage 48 configuré pour supporter les conduits 46.

Cet outillage 48 comprend au moins une base 50 qui présente une surface supérieure S50 sensiblement plane ainsi que, pour chaque conduit 46, un noyau 52 qui s'étend entre des première et deuxième extrémités 52.1, 52.2, la première extrémité 52.1 étant solidaire de la base 50, la deuxième extrémité 52.2 étant distante de la base 50. Selon une configuration, la base 50 et les noyaux 52 sont réalisés d'un seul tenant et ne forment qu'une unique et même pièce.

Selon une autre configuration, au moins un noyau 52 est un élément distinct de la base 50 et relié à cette dernière par une liaison 54. Selon un agencement, cette liaison 54 est une liaison démontable. Cet agencement permet de pouvoir utiliser la même base 50 et d'y implanter des noyaux 52 en fonction de l'agencement et des formes des conduits 46 de la structure alvéolaire 42 à réaliser.

Chaque noyau 52 présente une face latérale F52 qui présente une section transversale et s'étend de la première extrémité 52.1 jusqu'à la deuxième extrémité 52.2. Selon une particularité, chaque noyau 52 présente une section transversale identique à celle de la face intérieure du conduit 46 qu'il supporte. Ainsi, lorsque chaque conduit 46 est emmanché sans jeu sur le noyau 52 correspondant, il est parfaitement immobilisé dans un plan transversal par rapport à la base 50.

Selon une configuration, chaque noyau 52 présente une longueur (distance séparant ses première et deuxième extrémités 52.1, 52.2) sensiblement identique ou légèrement inférieure à celle du conduit 46 qu'il supporte. Ainsi, comme illustré sur la figure 6, lorsque chaque conduit 46 est positionné sur l'outillage 48, sa première extrémité 46.1 est en contact avec la base 50 et sa deuxième extrémité 46.2 affleure la deuxième extrémité 52.2 du noyau 52. La deuxième extrémité 46.2 de chaque conduit 46 est située dans un même plan que la deuxième extrémité 52.2 du noyau 52 autour duquel est positionné le conduit 46. En variante, la deuxième extrémité 52.2 de chaque noyau 52 est située dans un plan légèrement décalé vers la base 50 par rapport à un plan passant par les deuxièmes extrémités 46.2 des conduits 46.

Selon l'invention, la structure alvéolaire 42 comprend au moins une couche flexible 56 reliée aux deuxièmes extrémités 46.2 des conduits 46. Cette couche flexible 56 est en matériau thermoplastique. Selon un mode de réalisation, la couche flexible 56 est un film en matériau thermoplastique. Selon un autre mode de réalisation, la couche flexible 56 comprend au moins un tissu enrobé d'une résine thermoplastique ou noyé dans une résine thermoplastique. Quel que soit le mode de réalisation, la couche flexible 56 est suffisamment souple pour épouser la géométrie d'une surface complexe.

Selon un mode de réalisation, l'outillage 48 comprend au moins un système de chauffage et de pression 58 configuré pour chauffer la couche flexible 56 et au moins les deuxièmes extrémités 46.2 des conduits 46 et plaquer la couche flexible 56 contre les deuxièmes extrémités 46.2 des conduits 46. Selon une configuration, le système de chauffage et de pression 58 comprend au moins une plaque chauffante 58.1 qui présente une surface inférieure sensiblement parallèle à la surface supérieure S50 de la base 50 ainsi qu'au moins un actionneur 58.2 (représenté de manière schématique) configuré pour presser la surface inférieure de la plaque chauffante 58.1 contre la couche flexible 56. Le système de chauffage et de pression 58 est configuré pour obtenir une élévation de température supérieure ou égale à une température de fusion du matériau thermoplastique des conduits 46 et de la couche flexible 56 au niveau de l'interface entre la couche flexible 56 et les deuxièmes extrémités 46.2 des conduits 46 ainsi que pour exercer une pression suffisante afin de fusionner l'interface. Le système de chauffage et de pression 58 exerce une pression à plat, ce qui contribue à simplifier la gestion de la pression au niveau de chaque conduit 46.

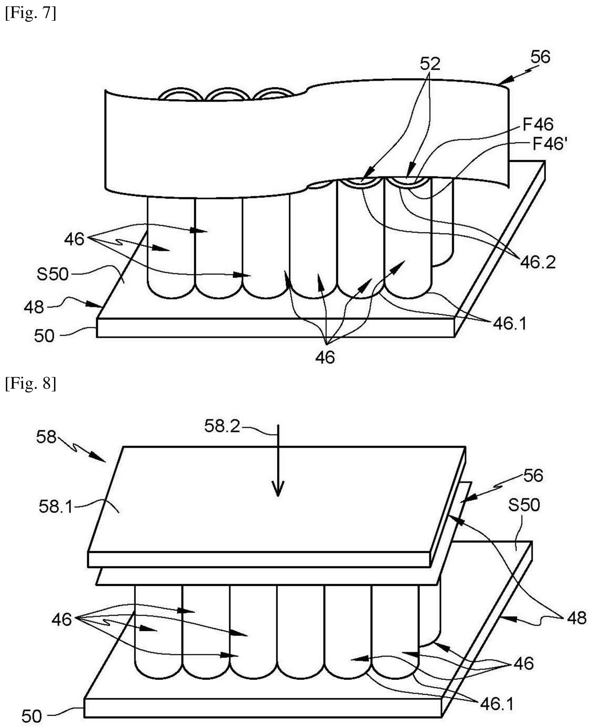

Selon un mode opératoire, un procédé de fabrication d'une structure alvéolaire 42 qui comporte des conduits 46 délimitant des alvéoles comprend une étape de fabrication des conduits 46 en matériau rigide thermoplastique, une étape de mise en place des conduits 46 sur l'outillage 48, chaque conduit 46 étant emmanché sur un noyau 42 de l'outillage 48 comme illustré sur la figure 6, puis une étape de mise en place de la couche flexible 56 en matériau thermoplastique contre les deuxièmes extrémités 46.2 des conduits 46 comme illustré sur la figure 7. En suivant, le procédé de fabrication comprend une étape de chauffage et de pression à plat pour fusionner la couche flexible 56 et les deuxièmes extrémités 46.2 des conduits 46 de manière à obtenir la structure alvéolaire 42, comme illustré sur la figure 8, puis une étape de démoulage de la structure alvéolaire 42, comme illustré sur la figure 9, visant à la séparer de l'outillage 48. Cette structure alvéolaire 42 en matériau thermoplastique peut être mise en forme selon une géométrie complexe, comme illustré sur la figure 10.

Un procédé de fabrication d'un panneau d'atténuation acoustique 38 comprend une étape de mise en forme de la structure perméable 40 et de la couche pleine 44. En suivant, le procédé comprend une étape de mise en place de la structure alvéolaire 42, obtenue à partir du procédé précédemment décrit, contre une première structure parmi la structure perméable 40 et la couche pleine 44 puis une étape de mise en place d'une deuxième structure différente de la première structure parmi la structure perméable 40 et la couche pleine 44 contre les premières extrémités 46.1 des conduits 46 de la structure alvéolaire 42. Enfin, le procédé de fabrication comprend une étape d'assemblage par co-cuisson ou co-estampage de l'ensemble composé de la structure perméable 40, de la structure alvéolaire 42 et de la couche pleine 44 pour obtenir une fusion de la première structure avec la couche flexible 56 de la structure alvéolaire 42 et de la deuxième structure avec les premières extrémités 46.1 des conduits 46 de la structure alvéolaire 42.

## Revendications

1. Procédé de fabrication d'une structure alvéolaire (42) d'un panneau d'atténuation acoustique (38), ladite structure alvéolaire (42) comportant des conduits (46) qui délimitent des alvéoles, chaque conduit (46) s'étendant entre des première et deuxième extrémités (46.1, 46.2), ledit procédé de fabrication comprenant une étape de fabrication des conduits (46) en matériau rigide thermoplastique ; **caractérisé en ce que** le procédé de fabrication comprend :
- une étape de mise en place des conduits (46) sur un outillage (48) qui comporte au moins une base (50) ainsi que, pour chaque conduit (46), un noyau (52) relié à la base (50), chaque conduit (46) étant emmanché sur un des noyaux (52) et sa première extrémité (46.1) étant en contact avec la base (50),
- une étape de mise en place d'une couche flexible (56) en matériau thermoplastique contre les deuxièmes extrémités (46.2) des conduits (46),
- une étape de chauffage et de pression à plat pour fusionner la couche flexible (56) et les deuxièmes extrémités (46.2) des conduits (46) de manière à former la structure alvéolaire (42),
- une étape de démoulage de la structure alvéolaire (42).

2. Procédé de fabrication selon la revendication 1, **caractérisé en ce que** chaque conduit présente une section transversale intérieure et une longueur et **en ce que** chaque noyau (52) présente une section transversale identique à la section transversale intérieure du conduit (46) qu'il supporte et/ou une longueur sensiblement identique ou légèrement inférieure à celle du conduit (46) qu'il supporte.

3. Procédé de fabrication selon l'une des revendications précédentes, **caractérisé en ce que** le matériau thermoplastique des conduits (46) et de la couche flexible (56) présente une température de fusion et **en ce que** lors de l'étape de chauffage et de pression à plat, une élévation de température supérieure ou égale à la température de fusion du matériau thermoplastique des conduits (46) et de la couche flexible (56) est produite au niveau d'une l'interface entre la couche flexible (56) et les deuxièmes extrémités (46.2) des conduits (46), une pression suffisante étant exercée pour fusionner l'interface.

4. Outillage pour la mise en œuvre d'un procédé de fabrication d'une structure alvéolaire (42) d'un panneau d'atténuation acoustique (38) selon l'une des revendications précédentes, **caractérisé en ce que** l'outillage comprend :
- au moins une base (50) présentant une surface supérieure (S50) sensiblement plane,
- pour chaque conduit (46) de la structure alvéolaire (42), un noyau (52) relié à la base (50),
- au moins un système de chauffage et de pression (58) configuré pour chauffer une couche flexible (56) et au moins l'une des extrémités (46.2) des conduits (46) de la structure alvéolaire (42) ainsi que pour plaquer la couche flexible (56) contre les extrémités (46.2) des conduits (46).

5. Outillage selon la revendication précédente, **caractérisé en ce que** le système de chauffage et de pression (58) comprend au moins une plaque chauffante (58.1) qui présente une surface inférieure sensiblement parallèle à la surface supérieure (S50) de la base (50) ainsi qu'au moins un actionneur (58.2) configuré pour presser la surface inférieure de la plaque chauffante (58.1) contre la couche flexible (56).

6. Outillage selon l'une des revendications 4 à 5, **caractérisé en ce que** chaque noyau (52) présente une section transversale identique à la section transversale intérieure du conduit (46) qu'il supporte et/ou une longueur sensiblement identique ou légèrement inférieure à celle du conduit (46) qu'il supporte.

7. Structure alvéolaire (42) d'un panneau d'atténuation acoustique (38) obtenue à partir d'un procédé de fabrication selon l'une des revendications 1 à 3, **caractérisée en ce que** la structure alvéolaire (42) comprend des conduits (46) qui délimitent des alvéoles, chaque conduit (46) s'étendant entre des première et deuxième extrémités (46.1, 46.2) ainsi qu'au moins une couche flexible (56) reliée aux deuxièmes extrémités (46.2) des conduits (46), les conduits (46) et la couche flexible (56) étant en matériau thermoplastique.

8. Panneau d'atténuation acoustique comprenant au moins une structure alvéolaire (42) selon la revendication 7, intercalée entre une structure perméable (40) à au moins une onde sonore et une couche pleine (44) imperméable aux ondes sonores.

9. Procédé de fabrication d'un panneau d'atténuation acoustique selon la revendication précédente, **caractérisé en ce que** le procédé de fabrication du panneau d'atténuation acoustique comprend :
- une étape de mise en place d'une structure alvéolaire (42), obtenue à partir d'un procédé de fabrication selon l'une des revendications 1 à 3, contre une première structure parmi une structure perméable (40) à au moins une onde sonore et une couche pleine (44) imperméable aux ondes sonores,
- une étape de mise en place d'une deuxième structure, différente de la première structure parmi la structure perméable (40) et la couche pleine (44), contre les premières extrémités (46.1) des conduits (46) de la structure alvéolaire (42),
- une étape d'assemblage de la structure perméable (40), de la structure alvéolaire (42) et de la couche pleine (44) pour obtenir une fusion de la première structure avec la couche flexible (56) de la structure alvéolaire (42) et de la deuxième structure avec les premières extrémités (46.1) des conduits (46) de la structure alvéolaire (42).
